Europäisches Patentamt

European Patent Office

Office européen des brevets

(19)

(11) Numéro de publication : **0 278 851 B1**

(12) **FASCICULE DE BREVET EUROPEEN**

(45) Date de publication du fascicule du brevet :
**27.12.91 Bulletin 91/52**

(51) Int. Cl.⁵ : **B01J 29/30, C10G 49/08**

(21) Numéro de dépôt : **88400218.9**

(22) Date de dépôt : **29.01.88**

(54) **Catalyseur à base de zéolithe, sa préparation et son utilisation dans des procédés de conversion d'hydrocarbures.**

(30) Priorité : **11.02.87 FR 8701803**

(43) Date de publication de la demande :
**17.08.88 Bulletin 88/33**

(45) Mention de la délivrance du brevet :
**27.12.91 Bulletin 91/52**

(84) Etats contractants désignés :
**BE DE GB IT NL**

(56) Documents cités :
**EP-A- 0 142 351**
**EP-A- 0 145 289**
**DE-B- 1 273 494**

(73) Titulaire : **INSTITUT FRANCAIS DU PETROLE**
**4, Avenue de Bois-Préau**
**F-92502 Rueil-Malmaison (FR)**

(72) Inventeur : **Travers, Christine**
**12, Bd. du Général De Gaulle**
**F-92500 Rueil Malmaison (FR)**
Inventeur : **Raatz, Francis**
**17, rue Michelet**
**F-92500 Rueil Malmaison (FR)**
Inventeur : **Dufresne, Pierre**
**67, rue Georges Sand**
**F-92500 Rueil Malmaison (FR)**
Inventeur : **Bournonville, Jean-Paul**
**43, rue des Groues Vauréal**
**F-95000 Cergy Pontoise (FR)**
Inventeur : **Franck, Jean-Pierre**
**24, avenue Ivan Tourgueneff**
**F-78300 Bougival (FR)**

## Description

La présente invention concerne la préparation d'un catalyseur comprenant une zéolithe sous forme acide et au moins un métal du groupe VIII de la classification périodique des éléments, présentant une activité accrue, ainsi que son utilisation dans diverses réactions de conversion d'hydrocarbures, telles que par exemple, l'hydrocraquage, le déparaffinage de coupes pétrolières et l'isomérisation des paraffines normales.

La plupart des mécanismes des réactions de conversion des hydrocarbures sont des mécanismes bifonctionnels faisant généralement intervenir une fonction acide et une fonction hydrogénante/déshydrogénante. Les procédés de conversion d'hydrocarbures utilisent donc, à de rares exceptions près, des catalyseurs bifonctionnels comportant généralement un support acide fournissant la fonction acide et un métal fournissant la fonction hydrogénante/déshydrogénante.

Ainsi on a décrit dans la littérature de très nombreux catalyseurs comprenant :

a) une zéolithe sous forme acide, désaluminée ou non, qui génère la fonction acide et,

b) au moins un métal du groupe VIII, par exemple le platine, le palladium ou le nickel, qui génère la fonction hydrogénante/déshydrogénante. L'efficacité du catalyseur dépend en particulier de la bonne dispersion du métal sur la zéolithe sous forme acide. Il est souhaitable d'avoir la plus grande dispersion possible du métal sur la zéolithe, de manière à ce que le maximum d'atomes de métal soient accessibles aux réactifs. La taille des cristallites métalliques doit être faible, de préférence inférieure ou égale à environ $10 \times 10^{-10}$m (10 Angstroms) et leur répartition la plus homogène possible.

Les zéolithes de synthèse sont obtenues sous une forme cationique, contenant des ions de métaux alcalins et/ou alcalino-terreux. Après synthèse, les zéolithes sont soumises à une suite de traitements tels que par exemple : calcination, échange au nitrate d'ammonium permettant de mettre ces zéolithes sous forme acide ; ces traitements sont bien connus de l'homme du métier.

Les zéolithes sous forme acide peuvent ensuite éventuellement être désaluminées par tout traitement bien connu de l'homme du métier. Les zéolithes ainsi définies sont soit utilisées telle que, soit mélangées intimement à une matrice, par exemple à une poudre humide d'un gel d'alumine. La zéolithe ou le mélange zéolithe-matrice formant le support du catalyseur est mis en forme, par exemple par extrusion au travers d'une filière. Lorsqu'un mélange zéolithe-matrice est utilisé comme support de catalyseur, la teneur en zéolithe du support ainsi obtenu est généralement supérieure à environ 15% et suivant les cas supérieure à environ 25% en poids par rapport au poids du support ; cette teneur en zéolithe est généralement d'environ 15% à environ 95% en poids et suivant les cas d'environ 25% à environ 90% en poids, par rapport au poids du support.

La mise en forme peut être réalisée avec d'autres matrices que l'alumine, telles que par exemple la silice-alumine, les argiles naturelles (par exemple le kaolin ou la bentonite), l'alumine-oxyde de bore, et avec une technique autre que l'extrusion telle que par exemple le pastillage, la dragéification ou toute autre technique connue de l'homme du métier.

Le métal du groupe VIII et en particulier le platine, le palladium et/ou le nickel est ensuite déposé sur le support décrit plus haut, par tout procédé connu de l'homme du métier, permettant le dépôt du métal sur la zéolithe. Il est introduit par exemple sous forme de complexe tétrammine par échange cationique. Cette méthode utilisant un complexe tétrammine, peut être appliquée pour déposer le métal soit sur la poudre de zéolithe, soit sur un produit déjà mis en forme, avec ou sans cations compétiteurs : le métal se déposera alors pratiquement quantitativement sur la zéolithe. Sur extrudés ou sur poudre, le métal peut également être déposé par la technique dite de l'imprégnation à sec. Le produit séché est ensuite habituellement calciné entre 300°C et 600°C.

Actuellement, par ces techniques classiques d'imprégnation des catalyseurs, il est très difficile, voire impossible, d'obtenir directement des particules de petite taille bien réparties sur le support. La répartition en taille des particules obtenues est en général très hétérogène. En effet les tailles de particules varient généralement d'environ 5 à environ 200 nm.

On a découvert selon l'invention qui si l'on fait subir au solide renfermant au moins un métal du groupe VIII de la classification périodique des éléments, supportés par au moins une zéolithe Y, la clinoptilolite, la ferriérite, l'offrétite, la ZSM5, la ZSM11, la zéolithe NU-1, la zéolithe oméga, la zéolithe bêta et la zéolithe L, ladite zéolithe ayant une teneur en cations alcalins et/ou alcalino terreux exprimée en équivalent poids de sodium inférieure à environ 0,5% poids par rapport au poids de la zéolithe sèche et de préférence inférieure à environ 0,3% poids, une oxychloration, dans des conditions modérées, ne modifiant pas le structure de la zéolithe, la dispersion du métal du groupe VIII est très nettement améliorée ce qui permet d'obtenir un catalyseur particulièrement actif pour les réactions de conversion d'hydrocarbures.

Le traitement d'oxychloration est généralement appliqué sur le solide contenant au moins un métal du groupe VIII et au moins l'une des zéolithes ci-avant, avec éventuellement une matrice telle que l'une de celles mentionnées ci-avant, dans les proportions indiquées ci-avant. Le traitement d'oxychloration est effectué de

2

préférence après séchage et calcination et éventuellement après réduction.

Les caractéristiques des différentes zéolithes utilisées dans le cadre de la présente invention sont bien connues et décrites par exemple par W. MEIER et D.H. OLSON, Atlas of Zéolithe Structure Types, 1978 ; elles sont reprises ci-après dans le tableau 1.

Le solide auquel on applique le traitement d'oxychloration contient généralement de 0,05 à 15% en poids de métal du groupe VIII. Dans le cas du platine et du palladium la teneur (en poids) est généralement de 0,05 à 5% et de préférence de 0,1 à 2%. Dans le cas du nickel la teneur pondérale est généralement de 0,1 à 15% en poids et de préférence de 0,2 à 5% en poids.

Le solide à base de zéolithe sous forme acide contenant au moins un métal du groupe VIII, tel que défini ci-dessus, est soumis à un traitement d'oxychloration, comprenant sa mise en contact avec du chlore et/ou au moins un composé chloré en présence d'un gaz contenant de l'oxygène et de la vapeur d'eau à une température d'environ 200 à 500°C et de préférence d'environ 300 à 480°C, le chlore et/ou le composé chloré étant utilisé en une quantité représentant au total de 0,5 à 10% poids calculé en poids de chlore par rapport au poids de zéolithe et de préférence de 1 à 5% poids.

Le traitement d'oxychloration consiste généralement à chauffer le solide, comprenant au moins un métal du groupe VIII, déposé sur la zéolithe acide, en présence d'un courant gazeux contenant de l'oxygène et de la vapeur d'eau, par exemple de l'air humide ou de l'oxygène dilué par un gaz inerte, la teneur en oxygène du mélange gazeux étant par exemple de 5 à 50% et de préférence de 10 à 35% en poids et sa teneur pondérale en eau étant généralement de 0,01 à 5% et de préférence de 0,05 à 1%. Le chauffage en présence du mélange gazeux contenant de l'oxygène et de l'eau est effectué de préférence de manière progressive jusqu'à la température choisie. La température augmente par exemple d'environ 5°C par minute jusqu'à la température choisie.

TABLEAU I

| Zéolithe | Forme | Analogue naturel | Cations engagés lors de la synthèse | $SiO_2/Al_2O_3$ après synthèse | système cristallin | Réseau de pores |
|---|---|---|---|---|---|---|
| NU1 | Synthétique | – | TMA[1] + cations alcalins | 15 – 180 | Inconnu | Inconnu (2) |
| Oméga | Synthétique | Mazzite | TMA[1] + sodium | 5 – 10 | Hexagonal | Unidimensionnel |
| ZSM5 | Synthétique | – | sodium et/ou cations organiques | supérieur ou égal à 10 | Orthorhombique | Tridimensionnel |
| ZSM11 | Synthétique | – | sodium et/ou cations organiques | supérieur ou égal à 5 | tétragonal | Tridimensionnel |
| Offrétite | Synthétique | Offrétite | TMA[1] + potassium | 6 – 8 environ | hexagonal | Tridimensionnel |
| Ferriérite | Synthétique | Ferriérite | sodium+ cations organiques | 8 – 18 environ | orthorhombique | Bidimensionnel |
| Clinopti-lolite | Synthétique | Clinopti-lolite | sodium + potassium | environ 10 | monoclinique | Système complexe comprenant 4 sortes de canaux |
| Zéolithe L | Synthétique | – | sodium + traces de potassium | 5,2 – 6,9 environ | hexagonal | Unidimensionnel |
| Zéolithe Y | Synthétique | Faujasite | sodium | 4 – 6 | Cubique | Tridimensionnel |
| Béta | Synthétique | – | TEA[3] + sodium | supérieur ou égal à 10 | Inconnu | Inconnu[4] |

(1) Tétraméthylammonium
(2) Voir brevet US 4060590 et SPENCER M.S., WHITTAM T.V., Acta Phys. Chem. 1978, 24 (1-2), 307.
(3) Tétraéthylammonium
(4) Voir brevet US 3 308 069

On introduit alors dans le courant gazeux d'oxygène et de vapeur d'eau, maintenu à la température choisie,

EP 0 278 851 B1

du chlore (Cl₂) et/ou au moins un composé chloré par exemple l'acide chlorhydrique (HCl) ou un composé chloré organique tel que le tétrachlorure de carbone, le dichloropropane, le dichloroéthane ou le chloroforme. Le débit d'injection du chlore ou du composé chloré est calculé de manière à ce que la durée nécessaire à l'injection de la quantité choisie de chlore, soit par exemple d'environ 0,5 à 6 heures, de préférence d'environ une heure et demie à environ 2 heures. Lorsque l'introduction du chlore est terminée le catalyseur est alors refroidi de préférence en présence du courant gazeux contenant de l'oxygène et de la vapeur d'eau décrit ci-dessus jusqu'à la température ambiante (comprise par exemple entre 10 et 30°C).

La teneur en chlore résiduel sur le catalyseur n'excède pas généralement 50% en poids, et souvent n'excède pas 30% en poids de la masse de chlore injecté. A cette teneur, le chlore n'est pas préjudiciable à la structure de la zéolithe, c'est-à-dire que la structure de la zéolithe n'est pas sensiblement modifiée.

Après le traitement d'oxychloration, la répartition en taille des cristallites de métal sur la zéolithe est beaucoup plus homogène. Le nombre de cristallites observables en microscopie électronique a fortement diminué ce qui montre que la majorité d'entre elles ont une taille inférieure à la limite de détection de l'appareillage utilisé qui est de 7 Angstroms (7 × 10⁻¹⁰ m).

Les tailles de particules données plus haut ont été mesurées à l'aide d'un microscope électronique à haute résolution. Le catalyseur destiné à être observé par microscopie électronique à transmission est broyé dans un mortier en agate, puis mis en suspension dans l'éthanol par ultrasons. Une goutte de cette suspension est ensuite déposée sur une grille de cuivre recouverte d'un mince film de carbone à trou. Après un bref séchage l'échantillon est observé par la technique dite du champ clair.

Les catalyseurs ainsi obtenus sont destinés à être utilisés dans les réactions de conversion des hydrocarbures et en particulier les réactions d'hydrocraquage et de déparaffinage par exemple des gas oils.

Avant d'être mis en contact avec la charge d'hydrocarbures dans les conditions de réaction, le catalyseur est de préférence soumis à une réduction par un gaz contenant au moins un composé réducteur, par exemple de l'hydrogène. On utilise de préférence comme gaz contenant au moins un composé réducteur, de l'hydrogène industriel. On peut également utiliser de l'hydrogène essentiellement pur, c'est-à-dire contenant moins de 0,5% en volume et de préférence moins de 0,1% en volume d'impuretés. Cette réduction est de préférence effectuée par paliers, jusqu'à une température de 350 à 750°C et de préférence de 400°C à 600°C pendant un temps suffisant pour que les concentrations en composés réducteurs soient les mêmes à l'entrée et à la sortie du réacteur, ce qui prouve que la réduction, dans les conditions choisies est terminée.

Le procédé de déparaffinage est généralement utilisé pour améliorer la tenue au froid de diverses coupes pétrolières, kérosènes, huiles lubrifiantes et surtout de gas oils moyens caractérisés par un intervalle de distillation allant d'une température initiale comprise généralement entre environ 160 et 320°C à une température finale comprise entre 310 et 430°C, une teneur en soufre comprise généralement entre 0,5 et 3,5% poids, un point d'écoulement et un point de trouble généralement supérieurs à 0°C.

Les conditions opératoires les plus avantageuses sont les suivantes :
— pression comprise entre 1,0 et 10,0 megapascal et de préférence entre 2 et 7 mégapascal,
— température comprise entre 300 et 460°C et de préférence entre 330 et 430°C,
— vitesse spatiale (VVH) en volume de charge par unité de volume de catalyseur et par heure, entre 0,1 et 5 et de préférence entre 0,3 et 2,
— rapport volumique $H_2$/hydrocarbures compris entre 200 : 1 (litres par litre) et 1500 : 1 et de préférence entre 300 : 1 et 1000 : 1.

L'utilisation des catalyseurs zéolithiques de l'invention permet des améliorations de points d'écoulement et de point de trouble. Parmi les zéolithes utilisées dans la présente invention on emploie de préférence, pour effectuer le déparaffinage de charges d'hydrocarbures, les zéolithes suivantes : ZSM5, ZSM11, offrétite, férriérite et clinoptilolite.

Les catalyseurs zéolithiques de l'invention peuvent également être avantageusement employés pour les réactions d'hydrocraquage de charges hydrocarbonées. Dans le procédé d'hydrocraquage, dont les conditions générales sont rappelées ci-après, les zéolithes que l'on préfère utiliser sont : la zéolithe Y, la zéolithe L, la zéolithe oméga et la zéolithe béta.

Le procédé d'hydrocraquage de coupes pétrolières par exemple de coupes pétrolières lourdes est un procédé très important du raffinage qui permet de produire, à partir de charges lourdes excédentaires et difficilement valorisables des fractions plus légères telles que essences, carburéacteurs et gazoles légers.

Les charges employées dans le présent procédé sont généralement des gazoles, des gazoles sous vide, des résidus désasphaltés ou hydrotraités ou équivalents. Elles sont généralement constituées au moins à 80% en volume de composés dont les points d'ébullition sont situés entre environ 350°C et environ 580°C. Elles contiennent des hétéroatomes tels que soufre et azote. Les conditions de l'hydrocraquage, telles que, température, pression, taux de recyclage d'hydrogène, vitesse volumique horaire, doivent être adaptées à la nature de la charge caractérisée notamment par la gamme des points d'ébullition, la teneur en aromatiques ou polya-

4

romatiques et la teneur en hétéroatomes. Les teneurs en azote sont généralement comprises entre 5 et 2000 ppm en poids et les teneurs en soufre entre 50 et 30000 ppm en poids (3%).

La température est en général supérieure à 230°C et souvent comprise entre 300 et 430°C. La pression est supérieure à 1,5 MPa et en général supérieure à 3 MPa et de préférence de 3 à 20 MPa. Le taux de recyclage d'hydrogène est au minimum de 100 et souvent compris entre 260 et 3000 litres d'hydrogène par litre de charge. La vitesse volumique horaire est comprise en général entre 0,2 et 10.

Les caractéristiques de l'invention sont précisées par quelques exemples présentés ci-après. Ces exemples définissent l'invention sans en limiter la portée.

EXEMPLE 1. Préparation du catalyseur A, non conforme à l'invention.

Une zéolithe Y, ayant une teneur en sodium de 9,4% poids par rapport au poids de zéolithe sèche et un paramètre de maille de $24,68 \times 10^{-10}$ m est soumise à trois échanges successifs dans une solution de nitrate d'ammonium ($NH_4NO_3$) 2M, à une température de 100°C puis à une calcination à 550°C, pendant 2 heures en atmosphère confinée. Elle subit ensuite un nouvel échange dans une solution de nitrate d'ammonium 2M. La teneur en sodium finale est de 0,12% poids par rapport au poids de solide sec, le paramètre cristallin de la maille est de $24,47 \times 10^{-10}$ m et le rapport atomique Si/Al est de 2,9. Cette zéolithe est ensuite malaxée avec un gel d'alumine préalablement peptisé par l'acide nitrique de manière à ce que la teneur en zéolithe du mélange obtenu soit de 40% poids par rapport au poids sec du mélange. La pâte est ensuite forcée dans une filière afin d'obtenir des extrudés de 1,5 millimètres de diamètre, qui sont ensuite séchés et calcinés à l'air à 550°C.

Ce support ainsi préparé, formé de 40% en poids de zéolithe et de 60% en poids d'alumine, est mis en contact avec une solution contenant du nitrate de palladium tétrammine et du nitrate d'ammonium, agent compétiteur, telle que le rapport de compétition défini par le rapport $NH_4^+/2 Pd(NH_3)_4^{++}$ soit égal à 50. Le taux d'échange des cations palladium est de 97% et la teneur finale du catalyseur en palladium est de 0,3% en poids par rapport au poids de l'extrudé sec. Les extrudés sont ensuite séchés à 150°C, puis calcinés à l'air à 500°C avec une vitesse de montée en température de 3°C par minute.

EXEMPLE 2. Préparation du catalyseur B, conforme à l'invention.

Le catalyseur B, diffère du catalyseur A, en ce que après l'étape de calcination à 500°C le catalyseur A obtenu suivant l'exemple 1 subit un traitement d'oxychloration dont les étapes sont les suivantes :
— montée en température depuis la température ambiante jusqu'à 400°C en une heure et demie sous un courant d'air contenant de l'ordre de 1000 ppm en poids d'eau,
— injection de chlore sous forme de tétrachlorure de carbone, dans l'air humide maintenu à 400°C, de manière à introduire 2% en poids de chlore par rapport au poids de catalyseur en une heure et demie,
— descente progressive jusqu'à température ambiante sous courant d'air humide.
La structure de la zéolithe observée par diffraction X n'a pas été modifiée par le traitement d'oxychloration. La teneur en chlore du catalyseur B obtenu, est de l'ordre de 0,5% poids.

EXEMPLE 3. Préparation d'un catalyseur C à base de zéolithe L contenant du platine, non conforme à l'invention.

Dans une première étape on prépare à partir d'une zéolithe L brute de synthèse une zéolithe L de rapport Si/Al égal à 15 appauvrie en potassium et conservant une bonne cristallinité en diffraction X.
La procédure de préparation est la suivante :
— la zéolithe L brute de synthèse utilisée à une composition chimique moléculaire approchée $K_2O$, $Al_2O_3$, $6SiO_2$, elle contient 14,4% en poids de potassium. Cette zéolithe subit trois échanges ioniques successifs dans des solutions de nitrate d'ammonium 10 N pendant 4 heures à l'ébullition, le rapport volume de solution sur poids de solide étant fixé à 4 $cm^3 \cdot g^{-1}$. Après échanges, le produit est lavé à l'eau distillée, filtré et séché à 100°C une nuit ; sa teneur en potassium est alors de 3% en poids. La zéolithe échangée est traitée à 600°C sous vapeur d'eau pendant deux heures, attaquée dans une solution acide HCl 0,2N à 100°C pendant quatre heures. A la suite de l'attaque acide elle subit une nouvelle calcination sous vapeur d'eau à 720°C pendant deux heures puis est finalement traitée dans une solution acide HCl 1,2 N à 100°C pendant 4 heures.

La zéolithe L sous forme acide obtenue à l'issue des traitements précédents est appelée L10. Son rapport (Si/Al) atomique est égal à 15, sa teneur en potassium est inférieure à 0,2% poids, sa cristallinité DX déterminée par rapport au solide initial est supérieure à 75%, sa capacité d'adsorption de benzène mesurée à 30°C (P/Ps = 0,28) est supérieure à 12,2% poids.

Dans une deuxième étape on prépare à partir de la zéolithe L10 obtenue ci-dessus un catalyseur bifonctionnel contenant du platine. Toutefois avant de déposer le métal la zéolithe L10 est mise en forme. On la malaxe avec un gel d'alumine peptisé au préalable par l'acide nitrique, la teneur pondérale en zéolithe du mélange est de 40%. La pâte obtenue est extrudée au travers d'une filière, de manière à obtenir des extrudés de 1,5 mm (1,5 × $10^{-3}$ m) de diamètre environ. Ces extrudés sont ensuite séchés, puis calcinés à l'air à 550°C. Le platine est déposé sur la zéolithe par échange ionique en utilisant le complexe $Pt(NH_3)_4 Cl_2$. L'échange est réalisé à 20°C pendant 2 heures par mise en contact des extrudés obtenu ci-avant avec une solution de $Pt(NH_3)_4Cl_2$ et de nitrate d'ammonium, ce dernier composé jouant le rôle d'agent compétiteur. Le rapport de compétition $NH_4^+/2Pt(NH_3)_4^{2+}$ est fixé à 50. Les extrudés sont ensuite séchés à 120°C pendant 6 heures puis calcinés sous air à 500°C avec une vitesse de montée en température de 2,5°C par minute. Après échange la teneur en platine des extrudés déterminée après calcination à 1000°C est égale à 0,3% poids. Le catalyseur ainsi obtenu est référencé catalyseur C.

EXEMPLE 4. Préparation d'un catalyseur D à base de zéolithe L contenant du platine, conforme à l'invention.

On prépare suivant l'exemple 3 une nouvelle quantité de catalyseur C que l'on soumet à un traitement d'oxychloration dans les conditions suivantes :
— montée en température depuis la température ambiante jusqu'à 400°C en une heure et demie sous un courant d'air contenant de l'ordre de 1000 ppm en poids d'eau (débit d'air = 5 l × $h^{-1}$ × $g^{-1}$),
— injection de chlore dans l'air humide maintenu à 400°C sous forme de tétrachlorure de carbone de manière à introduire 2% en poids de chlore par rapport au catalyseur en une heure et demie,
— descente progressive jusqu'à température ambiante sous courant d'air humide (teneur 1000 ppm en poids d'eau).
Après oxychloration le solide obtenu est dénommé catalyseur D. Il faut noter que le traitement d'oxychloration n'a pas ou très peu modifié la structure de la phase zéolithique, le diagramme de diffraction X du catalyseur D est pratiquement identique à celui du catalyseur C. La teneur en chlore du catalyseur D est voisine de 0,5% poids.

EXEMPLE 5. Préparation d'un catalyseur D' à base de zéolithe KL, contenant du platine et non conforme à l'invention.

On prépare à partir de la zéolithe L, brute de synthèse de composition molaire approchée $K_2O$ ; $Al_2O_3$ ; 6 $SiO_2$, un catalyseur contenant du platine. La zéolithe KL est tout d'abord mise en forme par malaxage avec un gel d'alumine, préalablement peptisé par de l'acide nitrique. La teneur pondérale en zéolithe du mélange est de 40 %. La pâte obtenue est forcée au travers d'une filière, de manière à obtenir des extrudés de 1,5 × $10^{-3}$ m de diamètre environ. Ces extrudés sont ensuite séchés puis calcinés à l'air à 550°C. Le platine est ensuite déposé sur la zéolithe par échange ionique en utilisant le complexe $Pt(NH_3)_4Cl_2$. L'échange est réalisé par mise en contact des extrudés obtenus ci-avant à 20°C, pendant 2 heures avec une solution de $Pt(NH_3)_4Cl_2$ et de nitrate d'ammonium, ce dernier composé jouant le rôle d'agent compétiteur. Le rapport de compétition $NH_4^+/2Pt(NH_3)_4^{2+}$ est égal à 50. Les extrudés sont ensuite séchés à 120°C pendant 6 heures puis calcinés sous air à 500°C, avec une vitesse de montée en température d'environ 2,5°C par minute. Après échange la teneur en platine des extrudés déterminée après calcination à 1000°C est égale à 0,3% poids. Ce solide ainsi obtenu est soumis à un traitement d'oxychloration dans les mêmes conditions que celles énoncées dans l'exemple 4.
Après oxychloration le solide obtenue est appelé catalyseur D'. Le traitement d'oxychloration n'a pas ou très peu modifié la structure de la phase zéolithique. Le diagramme de diffraction X du catalyseur D' est pratiquement identique à celui du solide avant oxychloration. La teneur en chlore du catalyseur D' est voisine de 0,5% poids.

EXEMPLE 6. Préparation d'un catalyseur E à base de zéolithe oméga contenant du platine, non conforme à l'invention.

Le solide de départ est une zéolithe oméga de synthèse de formule chimique approchée :
0,88 $Na_2O$ ; 0,12 $TMA_2O$ ; 1$Al_2O_3$ ; 8,30 $SiO_2$.
(TMA = tétraméthylammonium).
On prépare dans une première étape à partir de la zéolithe oméga brute de synthèse une zéolithe oméga décationisée, désaluminée et stabilisée de rapport Si/Al atomique égal à 12,5, en utilisant la procédure décrite dans la demande de Brevet français 85/13 105 déposée le 4 septembre 1985 au nom de la demanderesse.

La zéolithe forme NaTMA est tout d'abord calcinée sous un mélange molaire 10% $O_2$ + 90% $N_2$ (débit total 5 l × h$^{-1}$ × g$^{-1}$) à 550°C pendant 2 heures, puis subit trois échanges successifs dans des solutions de nitrate d'ammonium 6N à 100°C pendant 2 heures (rapport volume/poids de solide sec = 4 cm³/g).

A l'issue de cette première série de traitements les cations TMA sont éliminés et la teneur en sodium est inférieure à 0,04% en poids. Le solide est ensuite calciné à 700°C pendant 2 heures selon une procédure du type calcination en atmosphère confinée (self steaming). Après la calcination en atmosphère confinée (self steaming) la zéolithe est traitée à 100°C dans une solution HCl 1N pendant 4 heures (rapport volume/poids de solide sec = 13 cm³/g).

La zéolithe oméga préparée par les traitements précédents est appelée OM13. Son rapport Si/Al atomique est égal à 12,5, sa teneur en sodium est inférieure à 0,02% en poids, sa cristallinité DX déterminée par rapport au solide initial est supérieure à 80%, sa capacité d'absorption d'azote mesurée à 77 K pour une pression partielle égale à 0,19 s'élève à 13% en poids.

Dans la deuxième étape de la préparation la zéolithe OM13 est mise en forme selon la même procédure que celle décrite dans l'exemple 3 pour mettre en forme la zéolithe L10. On obtient ainsi des extrudés de 1,5 mm de diamètre environ dont la teneur en zéolithe est de 40% en poids. Ces extrudés sont mis en contact avec une solution de platine tétrammine $Pt(NH_3)_4Cl_2$ et de nitrate d'ammonium. Cette opération a pour objectif de déposer le platine par échange cationique avec compétition sur la phase zéolithique. Le rapport de compétition choisi $NH_4^+/2Pt(NH_3)_4^{2+}$ est égal à 50, la durée de l'échange est fixée à 2 heures, la température étant de 20°C. A l'issue de cet échange la quantité de platine fixée est égale à 97,5% de la quantité de platine engagée et la teneur en platine mesurée sur l'extrudé calciné à 1000°C est égale à 0,3% poids.

Après séchage à 120°C les extrudés sont calcinés sous air à 500°C avec une vitesse de montée en température de 2,5°C par minute. Le catalyseur résultant de cette dernière étape de préparation est référencé catalyseur E.

EXEMPLE 7. Préparation d'un catalyseur F à base de zéolithe oméga contenant du platine, conforme à l'invention.

On prépare comme décrit ci-avant dans l'exemple 6 une nouvelle quantité de catalyseur E. Le catalyseur E est soumis à un traitement d'oxychloration dans les mêmes conditions que celles décrites dans l'exemple 4. Après oxychloration le solide est référencé catalyseur F. Comme dans le cas de la zéolithe L (voir exemple 4), l'oxychloration ne modifie pas la structure de la phase zéolithique. En particulier les diagrammes de diffraction X de la zéolithe oméga avant et après oxychloration sont pratiquement identiques. La teneur en chlore du catalyseur F est voisine de 0,4% en poids.

EXEMPLE 8. Préparation d'un catalyseur G à base de ferriérite contenant du platine, non conforme à l'invention.

La zéolithe de départ est une ferriérite synthétique de rapport atomique Si/Al égal à 5,5 contenant comme cations de compensation Na$^+$ et TMA$^+$. Cette zéolithe est tout d'abord calcinée à 550°C pendant 4 heures sous un mélange molaire 10% $O_2$ + 90% $N_2$. Après calcination les cations TMA sont éliminés ; on fait alors subir au solide 2 échanges successifs dans des solutions aqueuses de nitrate d'ammonium 10N (rapport volume/poids de solide sec = 5 cm³/g) à 100°C pendant 2 heures. La teneur en sodium de la zéolithe est alors inférieure à 0,04% en poids, son rapport atomique Si/Al est toujours égal à 5,5 et sa cristallinité DX mesurée par rapport au solide initial est supérieure à 95%.

A ce stade la zéolithe est mise en forme par malaxage avec un gel d'alumine peptisé par l'acide nitrique et extrusion dans une filière. Les extrudés obtenus ont un diamètre voisin de 1,5 mm. Ils sont séchés à 120°C, puis calcinés à l'air à 590°C, leur teneur en zéolithe est égale à 40% poids. Le platine est déposé sur la zéolithe par échange cationique avec compétition dans une solution de platine tétrammine $Pt(NH_3)_4Cl_2$ et de nitrate d'ammonium. L'échange est réalisé à 20°C pendant 2 heures, le rapport de compétition $NH_4^+/2Pt(NH_3)_4^{2+}$ étant égal à 70. La teneur en platine déterminée sur les extrudés sont tout d'abord séchés à 120°C, puis subissent une calcination sous air à 500°C avec une vitesse de montée en température de 2,5°C par minute. Le catalyseur ainsi obtenu est référencé catalyseur G.

EXEMPLE 9. Préparation d'un catalyseur H à base de ferriérite contenant du platine, conforme à l'invention.

On prépare comme décrit ci-avant dans l'exemple 8 une nouvelle quantité de catalyseur G.

Le catalysuer G est soumis à un traitement d'oxychloration. La procédure d'oxychloration est identique à celle décrite dans l'exemple 4. Après oxychloration le solide est référencé catalyseur H ; il contient environ 0,3% en poids de chlore. Notons que l'oxychloration n'a pas affecté la structure cristalline de la zéolithe. En particulier les diagrammes de diffraction X de la ferriérite avant et après oxychloration sont pratiquement identiques.

EXEMPLE 10. Préparation d'un catalyseur I à base d'offrétite contenant du platine, non conforme à l'invention.

A partir d'un offrétite synthétique de rapport atomique Si/Al = 3,8 contenant comme cations de compensation $K^+$ et $TMA^+$ (teneur en potassium 9,6% poids) on prépare dans une première étape une offrétite décationisée, désaluminée et stabilisée de rapport Si/Al atomique = 20.

L'offrétite brute de synthèse subit tout d'abord une calcination à 550°C sous un mélange molaire 10% $O_2$ + 90% $N_2$ pendant 4 heures (débit 5 l × $h^{-1}$ × $g^{-1}$) puis est échangée trois fois dans des solutions de nitrate d'ammonium 10N à 100°C pendant deux heures (rapport volume/poids sec de solide = 6 cm³/g). A l'issue de ces traitements les cations $TMA^+$ sont éliminés et la teneur en potassium n'est plus que 2,9% en poids. Le solide est alors soumis à une calcination sous un mélange d'air et de vapeur d'eau (teneur molaire en vapeur d'eau: 80%, débit d'air 2 l × $h^{-1}$ × $g^{-1}$, injection de la vapeur d'eau à 400°C) à 630°C pendant deux heures, à la suite de quoi le solide est traité dans une solution de nitrate d'ammonium 10N à 100°C pendant 2 heures (rapport volume/poids sec de solide = 5 cm³/g) puis dans une solution de HCl 0,5N à 100°C pendant 4 heures (rapport volume/poids sec de solide = 10 cm³/g). Après ce traitement acide, la zéolithe subit une nouvelle calcination sous vapeur d'eau dans les mêmes conditions que précédemment mais à une température supérieure soit 730°C, à la suite de quoi elle est traitée dans une solution acide HCl 1N à 100°C pendant 4 heures (rapport volume/poids solide sec = 10 cm³/g).

L'offrétite obtenue à la suite de ces divers traitements est référencée OF20. Elle possède un rapport atomique Si/Al = 20, sa teneur en potassium est inférieure à 0,3% en poids, sa cristallinité DX est égale à 80% (référence solide initial) et sa capacité d'adsorption d'azote mesurée à 77 K sous une pression partielle de 0,19 est égale à 0,250 cm³ (liquide) $g^{-1}$.

Le solide OF20 est ensuite mis en forme dans les mêmes conditions que la zéolithe L10 de l'exemple 3. Les extrudés de 1,5 mm de diamètre contenant 40% poids de zéolithe sont ensuite mis en contact avec une solution de platine tétrammine $Pt(NH_3)_4Cl_2$ et de nitrate d'ammonium, le rapport $NH_4^+/2Pt(NH_3)_4^{2+}$ étant fixé à 50. Le platine est ainsi déposé sur la zéolithe par échange cationique avec compétition (l'agent compétiteur étant $NH_4^+$). La teneur en platine mesurée sur les extrudés calcinés à 1000°C est égale à 0,3% poids. Après l'échange les extrudés sont séchés à 120°C puis calcinés sous air à 500°C avec une vitesse de montée en température de 2,5°C par minute. Le catalyseur issu de l'ensemble des opérations précédentes est référencé catalyseur I.

EXEMPLE 11. Préparation d'un catalyseur J à base d'offrétite contenant du platine et conforme à l'invention.

On prépare comme décrit ci-avant dans l'exemple 10 une nouvelle quantité de catalyseur I. Le catalyseur I est soumis à un traitement d'oxychloration identique à celui décrit dans l'exemple 4. Le solide obtenu par oxychloration est référencé catalyseur J. L'oxychloration ne modifie pas la structure de l'offrétite comme l'attestent les spectres de diffraction X, du catalyseur I et du catalyseur J. Le catalyseur J a une teneur en chlore égale à 0,2% en poids.

EXEMPLE 12. Préparation d'un catalyseur K à base de ZSM5 contenant du platine, non conforme à l'invention.

Le solide de départ est une zéolithe synthétique de structure ZSM5 contenant comme cations de compensation $Na^+$ et $TPA^+$ (tétrapropylammonium) et dont le rapport atomique Si/Al est égal à 21. Cette zéolithe est tout d'abord calcinée sous un mélange d'oxygène et d'azote dans les proportions molaires 10% $O_2$ + 90% $N_2$ à 550°C pendant 3 heures. Elles est ensuite échangée deux fois dans des solutions de nitrate d'ammonium 10N à 100°C pendant 2 heures (rapport volume/poids sec de solide = 10 cm³/g).

A ce stade les cations TPA ont été éliminés et la teneur de la zéolithe en sodium est inférieure à 0,01% en poids ; son rapport atomique Si/Al est toujours égal à 21.

Le solide est alors mis en forme par malaxage avec un gel d'alumine peptisé par l'acide nitrique puis extrusion. Les extrudés dont le diamètre est voisin de 1,5 mm sont séchés à 120°C puis calcinés sous air à 680°C. Du platine est déposé sur la phase zéolithique par échange cationique avec compétition. Le platine est introduit sous forme $Pt(NH_3)_4Cl_2$, l'agent compétiteur étant $NH_4^+$ fourni par le nitrate d'ammonium (rapport de compétition = 50). L'échange est réalisé à 20°C, la teneur en platine mesurée sur les extrudés calcinés à 1000°C est égale à 0,3% poids.

Après échange les extrudés sont séchés à 120°C puis calcinés sous air à 500°C, la vitesse de montée en température étant fixée à 2,5°C par minute. Le catalyseur ainsi obtenu est référencé catalyseur K.

EXEMPLE 13. Préparation d'un catalyseur L à base de ZSM5 contenant du platine, conforme à l'invention.

On prépare comme décrit ci-avant dans l'exemple 12 une nouvelle quantité de catalyseur K. Le catalyseur K est soumis à une procédure d'oxychloration identique à celle de l'exemple 4. Le catalyseur oxychloré est référencé catalyseur L, il contient 0,2% de chlore. La structure cristallographique de la zéolithe ZSM5 n'est pas affectée par l'oxychloration : les spectres de diffraction X du catalyseur K et du catalyseur L sont pratiquement identiques.

Par microscopie électronique on a observé les cristallites métalliques de palladium ou de platine sur les catalyseurs de comparaison A, C, E, G, I et K. La répartition en taille de ces cristallites est tout à fait hétérogène; le taille des plus grosses d'entre elles qui sont parfois regroupées en amas est de l'ordre de 50 nanomètres. La majorité des particules métalliques a une taille comprise entre 3 et 20 nanomètres.

On a également observé par la même méthode les catalyseurs B, D, F, H, J et L conformes à l'invention. Le nombre de cristallites métalliques observable, dont la taille est supérieure à 0,7 nm est très faible. La majorité des cristallites a donc une taille inférieure à la limite de détection de l'appareillage utilisée, qui est de 0,7 nm.

Les catalyseurs décrits dans les exemples 1 à 7 sont mis en oeuvre dans un test d'hydrocraquage dans les conditions suivantes.

Après chargement dans l'unité de test, le catalyseur (50 ml) est traité avec un débit d'hydrogène de 150 litres par heure à une pression de 4,5 MPa, à une température de 450°C pendant 4 heures, la montée en température étant de 1°C par minute. Ensuite la température est abaissée à 150°C, la pression montée 12,0 MPa, le débit d'hydrogène fixé à 50 litres par heure et la charge est injectée à un débit de 50 ml/heure.

La charge utilisée est un distillat sous vide hydrotraité de point initial d'ébullition de 300°C et de point final d'ébullition de 480°C, contenant 190 ppm en poids de soufre.

La température est progressivement portée à 300°C et les conditions sont laissées inchangées pendant 80 heures, temps au bout duquel l'activité catalytique est mesurée ; celle-ci est exprimée en terme de conversion brute en produits de point d'ébullition inférieur à 350°C (350⁻) correspondant à la fraction de la recette à point d'ébullition inférieur à 350°C.

Les performances catalytiques obtenues avec les catalyseurs A à F après 80 heures de fonctionnement figurent dans le tableau III ci-après. On constate que les catalyseurs B, D et F suivant l'invention permettent d'obtenir des performances accrues par rapport aux catalyseurs de l'art antérieur respectivement A, C et E qui n'ont pas subi au cours de leur préparation un traitement d'oxychloration et par rapport au catalyseur de comparaison D' préparé à partir d'une zéolithe L brute de synthèse sous forme non acide, ayant subi au cours de sa préparation un traitement d'oxychloration.

Les catalyseurs décrits dans les exemples 8 à 13 sont mis en oeuvre dans un test de tenue au froid d'un gazole dans les conditions suivantes :

Les procédures d'activation du catalyseur sont les suivantes : 50 ml de catalyseur sont chargés dans l'unité de test ; le débit d'hydrogène est porté à 150 litres par heure, la pression à 4,0 MPa et la température à 470°C, la montée en température étant de 1°C par minute. Après un palier de 4 heures, on descend à 150°C, le débit d'hydrogène est porté à 250 litres par heure et la charge est injectée à un débit de 50 ml par heure, celle-ci est un gazole moyen atmosphérique dont les caractéristiques figurent dans le tableau II ci-après. La température est montée progressivement jusqu'à 250°C puis éventuellement à des valeurs plus élevées de façon à obtenir une amélioration de point d'écoulement compris entre 16 et 21°C. Quand ces conditions sont atteintes, le test est poursuivi pendant une période de 350 heures afin de juger de la stabilité du catalyseur ; la température est corrigée de façon à obtenir toujours une performance proche de 18°C d'amélioration de point d'écoulement.

Les performances des catalyseurs G à L sont exprimées en écarts de température constatés entre la fin et le début du test à performance constante. Ces performances sont mentionnées dans le tableau IV ci-après. On constate qu'après 350 heures de fonctionnement les catalyseurs H, J et L suivant l'invention permettent d'obtenir des performances accrues par rapport aux catalyseurs de l'art antérieur respectivement G, I et K qui n'ont pas subi au cours de leur préparation un traitement d'oxychloration.

## TABLEAU II

CARACTERISTIQUES DE LA CHARGE = GAZOLE MOYEN ATMOSPHERIQUE.

| | |
|---|---|
| Distillation : Point initial (°C)  10 % | + 280 |
| 10 % | + 320 |
| 30 % | + 336 |
| 50 % | + 344 |
| 70 % | + 351 |
| 90 % | + 362 |
| 100 % | + 370 |
| Densité       à 20°C | 0,8805 |
| Indice de réfraction   à 20°C | 1,4919 |
| Soufre (% poids) | 1,72 |
| Azote (ppm) | 280 |
| Point d'écoulement (°C) | + 21 |
| Point de trouble (°C) | + 21 |

## TABLEAU III

### PERFORMANCES EN HYDROCRAQUAGE

| Catalyseur | Support | Conversion en 350$^-$ |
|---|---|---|
| A* | Zéolithe Y | 70 % |
| B | Zéolithe Y | 80 % |
| C* | Zéolithe L | 50 % |
| D | Zéolithe L | 63 % |
| D'* | Zéolithe KL | 20 % |
| E* | Zéolithe oméga | 60 % |
| F | Zéolithe oméga | 75 % |

\* Comparaison

## TABLEAU IV

### PERFORMANCES EN DEPARRAFFINAGE

| Catalyseur | Support | Ecart de température (°C) entre fin et début de test |
|---|---|---|
| G* | Ferriérite | 10 |
| H | Ferriérite | 8 |
| I* | Offrétite | 10 |
| J | Offrétite | 6 |
| K* | ZSM5 | 8 |
| L | ZSM5 | 5 |

\* Comparaison

## Revendications

1. Catalyseur caractérisé en ce qu'il est le produit résultant d'une oxychloration d'un solide calciné renfermant au moins un métal du groupe VIII de la classification périodique des éléments, supporté par au moins une zéolithe sous forme acide, choisie dans le groupe formé par la ferriérite, l'offrétite, la clinoptilolite, la zéolithe oméga, la zéolithe L et la zéolithe bêta, ladite zéolithe ayant une teneur en cations alcalins et/ou alcalino-terreux exprimés en équivalent poids de sodium inférieure à 0,5% poids par rapport au poids de la zéolithe sèche et ladite oxychloration comprenant les étapes suivantes :

a) mise en contact du solide calciné avec un gaz contenant de l'oxygène et de 0,01 à 5% en poids d'eau, et chauffage depuis la température ambiante jusqu'à une température d'environ 300 à 480°C,

b) introduction dans le mélange gazeux, maintenu dans le domaine de température de 300 à 480°C, de chlore et/ou d'au moins un composé chloré en quantité représentant au total de 1 à 5% poids calculé en poids de chlore par rapport au poids de zéolithe, le débit d'injection du chlore et/ou du composé chloré étant tel que la durée de ladite étape b) est d'environ une demi-heure à environ 6 heures,

c) maintien du contact du solide obtenu à l'étape b) avec un gaz contenant de l'oxygène et de 0,01 à 5% en poids d'eau et refroidissement jusqu'à la température ambiante.

2. Catalyseur selon la revendication 1 dans lequel on emploie pour l'oxychloration du chlore et/ou un composé chloré choisi dans le groupe constitué par l'acide chlorhydrique, le tétrachlorure de carbone, le dichloroéthane, le dichloropropane et le chloroforme.

3. Catalyseur selon l'une des revendications 1 et 2 dans lequel le métal du groupe VIII est choisi dans le groupe formé par le platine, le palladium et le nickel.

4. Catalyseur selon l'une des revendications 1 à 3 dans lequel le solide renferme en outre une matrice en quantité telle que la quantité de zéolithe représente au moins 15% en poids par rapport au poids de l'ensemble zéolithe et matrice.

5. Utilisation d'un catalyseur selon l'une des revendications 1 à 4 dans les réactions de conversion d'hydrocarbures.

## Patentansprüche

1. Katalysator, dadurch gekennzeichnet, daß es sich dabei handelt um das Produkt der Oxychlorierung eines calcinierten Feststoffes, der mindestens ein Metall der Gruppe VIII des Periodischen Systems der Elemente, aufgebracht auf mindestens einen Zeolith-Träger in der Säure-Form, ausgewählt aus der Gruppe, die gebildet wird durch Ferrierit, Offretit, Clinoptilolit, Omega-Zeolith, L-Zeolith und Beta-Zeolith, enthält, wobei der Zeolith einen Gehalt an Alkali- und/oder Erdalkalikationen, ausgedrückt in Gewichts-Aquivalenten Natrium, von weniger als 0,5 Gew.-%, bezogen auf das Gewicht des trockenen Zeoliths, hat und die Oxychlorierung die folgenden Stufen umfaßt :

(a) Kontaktieren des calcinierten Feststoffes mit einem Gas, das Sauerstoff und 0,01 bis 5 Gew.-% Wasser enthält, und Erwärmen von Umgebungstemperatur bis auf eine Temperatur von etwa 300 bis 480°C,

(b) Einführen von Chlor und/oder mindestens einer chlorierten Verbindung in einer Menge, die insgesamt 1 bis 5 Gew.-%, berechnet als Gewicht von Chlor, bezogen auf das Gewicht des Zeoliths, dargestellt, in das Gasgemisch, das bei einer Temperatur in dem Bereich von 300 bis 480°C gehalten wird, wobei die zugeführte Menge an Chlor und/oder chlorierter Verbindung so groß ist, daß die Dauer der Stufe (b) etwa 1/2 Stunde bis etwa 6 Stunden beträgt, und

(c) Aufrechterhalten des Kontakts zwischen dem in der Stufe (b) erhaltenen Feststoff und einem Gas, das Sauerstoff und 0,01 bis 5 Gew.-% Wasser enthält, und Abkühlen bis auf Umgebungstemperatur.

2. Katalysator nach Anspruch 1, in dem man für die Oxychlorierung Chlor und/oder eine chlorierte Verbindung, ausgewählt aus der Gruppe, bestehend aus Chlorwasserstoffsäure, Tetrachlorkohlenstoff, Dichlorethan, Dichlorpropan und Chloroform, verwendet.

3. Katalysator nach einem der Ansprüche 1 und 2, in dem das Metall der Gruppe VIII des Periodischen Systems der Elemente ausgewählt wird aus der Gruppe, die gebildet wird von Platin, Palladium und Nickel.

4. Katalysator nach einem der Ansprüche 1 bis 3, in dem der Feststoff außerdem eine Matrix in einer solchen Menge enthält, daß die Menge des Zeoliths mindestens 15 Gew.-%, bezogen auf das Gewicht der Gesamtmenge von Zeolith und Matrix, darstellt.

5. Verwendung eines Katalysators nach einem der Ansprüche 1 bis 4 in den Reaktionen zur Umwandlung von Kohlenwasserstoffen.

## Claims

1. A catalyst characterised in that it is the product resulting from oxychlorination of a calcined solid containing at least one metal in group VIII of the period table of elements, which is supported by at least one zeolite in acid form, selected from the group formed by ferrierite, offretite, clinoptilotite, omega zeolite, L zeolite and beta zeolite, said zeolite having a content of alkali metal and/or alkaline earth cations expressed as equivalent weight of sodium of less than 0.5% by weight with respect to the weight of the dry zeolite and said oxychlorination operation comprising the following steps :

a) bringing the calcined solid into contact with a gas containing oxygen and from 0.01 to 5% by weight of water, and heating from ambient temperature to a temperature of from about 300 to 480°C,

b) introducing into the gaseous mixture which is maintained in the temperature range of from 300 to 480°C, chlorine and/or at least one chlorine-bearing compound in an amount representing in total from 1 to 5% by weight calculated in respect of weight of chlorine with respect to the weight of zeolite, the injection flow rate for the chlorine and/or the chloreine-bearing compound being such that the duration of said step b) is from about half an hour to about 6 hours, and

c) maintaining the solid obtained in step b) in contact with a gas containing oxygen and from 0.01 to 5% by weight of water, and cooling to ambient temperature.

2. A catalyst according to claim 1 wherein chlorine and/or a chlorine-bearing compound selected from the group formed by hydrochloric acid, carbon tetrachloride, dichloroethane, dichloropropane and chlorform is used for the oxychlorination operation.

3. A catalyst according to one of claims 1 and 2 wherein the metal of troup VIII is selected from the group formed by platinum, palladium and nickel.

4. A catalyst according to one of claims 1 to 3 wherein the solid further contains a matrix in an amount such that the amount of zeolite represents at least 15% by weight with respect to the weight of the zeolite and matrix whole.

5. Use of a catalyst according to one of claims 1 to 4 in reactions for the conversion of hydrocarbons.